Europäisches Patentamt

European Patent Office

Office européen des brevets

(19)

(11) Numéro de publication : **0 147 301 B1**

(12) **FASCICULE DE BREVET EUROPÉEN**

(45) Date de publication du fascicule du brevet :
29.07.87

(21) Numéro de dépôt : **84402625.2**

(22) Date de dépôt : **18.12.84**

(51) Int. Cl.⁴ : **B 60 J 1/02**, B 23 P 19/00

(54) **Tête à six axes de corrections de mouvements.**

(30) Priorité : 23.12.83 FR 8320655

(43) Date de publication de la demande :
03.07.85 **Bulletin 85/27**

(45) Mention de la délivrance du brevet :
29.07.87 **Bulletin 87/31**

(84) Etats contractants désignés :
**DE GB IT SE**

(56) Documents cités :
EP-A- 0 072 277
FR-A- 1 390 177
FR-A- 1 419 065
PATENTS ABSTRACTS OF JAPAN, vol. 7, no. 12 (M-186)[1157], 19 janvier 1983;

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Leddet, Philippe**
**27, rue Paul Deroulède**
**F-78290 Croissy sur Seine (FR)**

(74) Mandataire : **Srour, Elie et al**
**REGIE NATIONALE DES USINES RENAULT (S. 0804)**
**8 & 10 Avenue Emile Zola**
**F-92109 Boulogne Billancourt (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente demande se rapporte à un dispositif de correction de mouvement équipant un outil mobile tel que défini dans le préambule de la revendication 1. La présente invention a notamment pour objet de permettre le montage adaptatif d'un élément sur un support grâce à un outil mobile muni d'une part de moyens de retenue de l'élément et d'autre part de capteurs détectant la proximité du support et délivrant des signaux de commande aux moyens d'entraînement de l'outil mobile de montage pour le positionner correctement par rapport au support. Un tel outil mobile de montage a déjà été décrit dans la demande de brevet d'invention français FR-A-2 510 933. Ce document décrit et représente un outil pour réaliser la pose automatique d'un élément de vitrage sur une caisse de véhicule avec une bonne précision de la localisation dans l'espace du point de chargement et de celui de dépose de l'élément de vitrage.

On constate toutefois que la précision de montage obtenue par cet outil de pose n'est pas suffisante dans certaines applications et notamment dans le cas de la pose des éléments de vitrage qui sont collés sur la caisse et qui nécessitent une très grande précision dans le positionnement par rapport à la caisse, l'élément de vitrage n'étant plus reçu dans un joint périphérique absorbant les dispersions.

Le problème particulier relatif à la pose des éléments de vitrage collés qui vient d'être évoqué a amené la demanderesse à développer une tête de correction de mouvements qui puisse être montée à l'extrémité d'un outil mobile de pose tel que par exemple un bras de robot ou d'automate qui permette de réaliser avec la plus grande précision possible le montage adaptatif d'un élément sur un support.

Dans ce but, l'invention propose une tête à six axes de correction de mouvements équipant un outil mobile pour le montage adaptatif d'un élément sur un support muni d'une part de moyens de retenue de l'élément et d'autre part de capteurs détectant la proximité du support et délivrant des signaux de commande aux moyens d'entraînement de l'outil mobile de montage pour le positionner correctement par rapport au support, caractérisée en ce qu'elle comporte un châssis supérieur fixé à l'outil mobile de montage définissant un premier plan géométrique $P_1$, un châssis intermédiaire définissant un second plan géométrique $P_2$ et relié au châssis supérieur par des premiers moyens moteurs permettant d'effectuer deux translations $T_{X1}$, $T_{Y1}$ du plan $P_2$ parallèlememt au plan $P_1$ selon deux axes orthogonaux $O_{X1}$, $O_{Y1}$ du plan $P_1$ et une rotation $R_{Z1}$ du plan $P_2$ autour d'un axe $O_{Z1}$ orthogonal au plan $P_1$, un châssis inférieur définissant un troisième plan géométrique $P_3$ et relié au châssis intermédiaire par des seconds moyens moteurs permettant d'effectuer une translation $T_{Z2}$ du plan $P_3$ par rapport au plan $P_2$ selon un axe orthogonal $O_{Z2}$

au plan $P_2$ et deux rotations $R_{X2}$, $R_{Y2}$ du plan $P_3$ autour de deux axes orthogonaux $O_{X2}$, $O_{Y2}$ du plan $P_2$, les moyens de retenue de l'élément étant fixés sur le châssis inférieur, lesdits signaux délivrés par les capteurs de proximité étant également délivrés aux moyens de commande des premiers et seconds moyens moteurs.

On comprend que grâce à une telle structure de la tête de correction de mouvements, il est possible d'effectuer une correction très précise de la position de l'élément par rapport au support qui va le recevoir et cela en décomposant les mouvements de correction selon trois axes de translation et trois axes de rotation de façon à corriger l'erreur de positionnement transversal selon trois axes orthogonaux ainsi que l'erreur en rotation autour de ces trois axes.

Selon une autre caractéristique de l'invention, les premiers moyens moteurs sont constitués par trois mécanismes comportant chacun un excentrique rond monté sur le châssis supérieur, entraîné en rotation par un axe moteur orthogonal au plan $P_1$ décalé par rapport au centre de l'excentrique, et reçu dans une boutonnière formée dans le châssis intermédiaire et délimitée par deux portions rectilignes parallèles, les trois axes moteurs étant disposés aux sommets d'un triangle, deux desdites boutonnières étant parallèles entre elles et la troisième boutonnière étant orthogonale à leur direction commune, la rotation de chacun des trois axes moteurs pouvant être commandée sélectivement en vue d'effectuer lesdites translations $T_{X1}$, $T_{Y1}$ et ladite rotation $R_{Z1}$ du plan $P_2$ par rapport au plan $P_1$.

La tête à six axes de correction de mouvements comporte en outre des moyens de guidage et de liaison du châssis intermédiaire par rapport au châssis supérieur assurant le parallélisme constant des plans $P_1$ et $P_2$.

Selon une autre caractéristique de l'invention, les seconds moyens moteurs sont constitués par trois vérins à double action disposés en triangle dont chacun comporte un corps fixé sur le châssis intermédiaire et une tige susceptible de se déplacer orthogonalement au plan $P_2$ et dont l'extrémité est articulée sur le châssis inférieur, l'actionnement de chacun des trois vérins pouvant être commandé sélectivement en vue d'effectuer ladite translation $T_{Z2}$ et lesdites rotations $R_{X2}$, $R_{Y2}$ du plan $P_3$ par rapport au plan $P_1$.

La structure de la tête qui vient d'être décrite et des moyens moteurs qu'elle comporte permet de séparer en deux étapes la correction selon six axes, une première étape permettant d'effectuer un centrage plan sur plan du plan $P_2$ par rapport au plan $P_1$ grâce aux premiers moyens moteurs constitués par les excentriques qui peuvent être commandés par des moteurs électriques, et une seconde étape permettant de réaliser une correction selon les trois autres axes de la position du plan $P_3$ par rapport au plan $P_2$ grâce aux trois vérins à double action qui peuvent également être commandés électriquement par trois moteurs indépendants, la commande électrique sélective des six moteurs électriques mis en jeu pour réaliser une étape globale de correction pouvant être effectuée selectivement après traitement des signaux délivrés par les capteurs de proximité et calcul des erreurs de positionnement transversal et/ou en rotation.

On décrira maintenant à titre d'exemple un mode de réalisation d'une tête à six axes de correction de mouvements équipant un outil mobile pour le montage adaptatif d'un élément de vitrage sur une caisse de véhicule automobile, outil pour la description complète duquel on se reportera avantageusement à la demande de brevet d'invention français FR-A-2 510 933.

Pour une compréhension plus aisée de la description qui va suivre, on se reportera aux dessins annexés dans lesquels :

la figure 1 est une vue en élévation d'une tête de correction de mouvements réalisée conformément aux enseignements de la présente invention ;

la figure 2 est une vue de dessus de la tête de correction représentée à la figure 1 ;

la figure 3 est une vue en coupe partielle représentant en détail un des trois excentriques constituant les premiers moyens moteurs de l'invention ;

la figure 4 est une vue de dessus en coupe partielle de l'excentrique représenté à la figure 3 ;

la figure 5 est une vue en élévation d'un des trois vérins à double action constituant les seconds moyens moteurs de l'invention ;

la figure 6 est une vue latérale de gauche de la tête de correction de mouvements de la figure 1 représentée reliée à l'extrémité d'un outil mobile de pose ; et la figure 7 est un schéma permettant de faciliter la représentation géométrique dans l'espace des positions respectives des plans $P_1$, $P_2$, $P_3$ et des mouvements de correction selon six axes obtenus grâce à la tête de correction représentée aux figures 1 à 6.

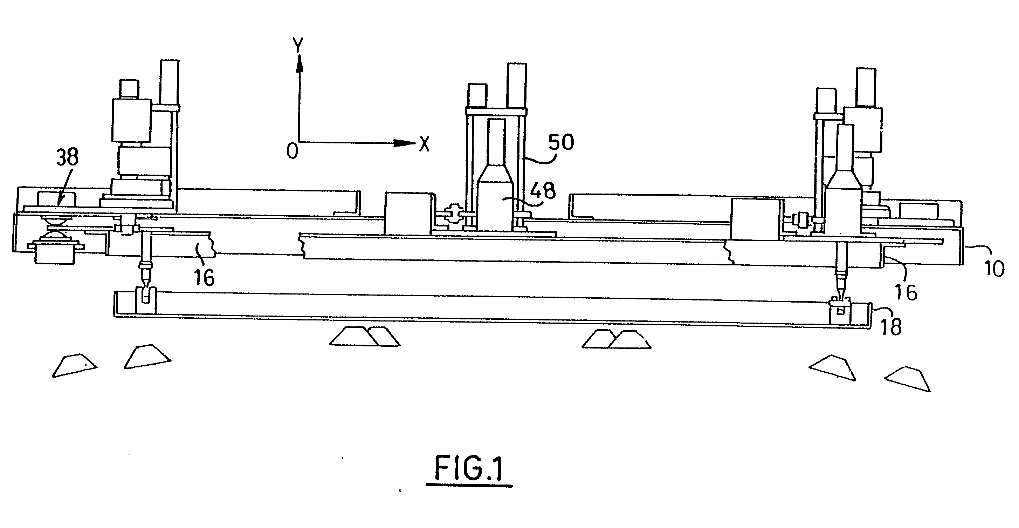

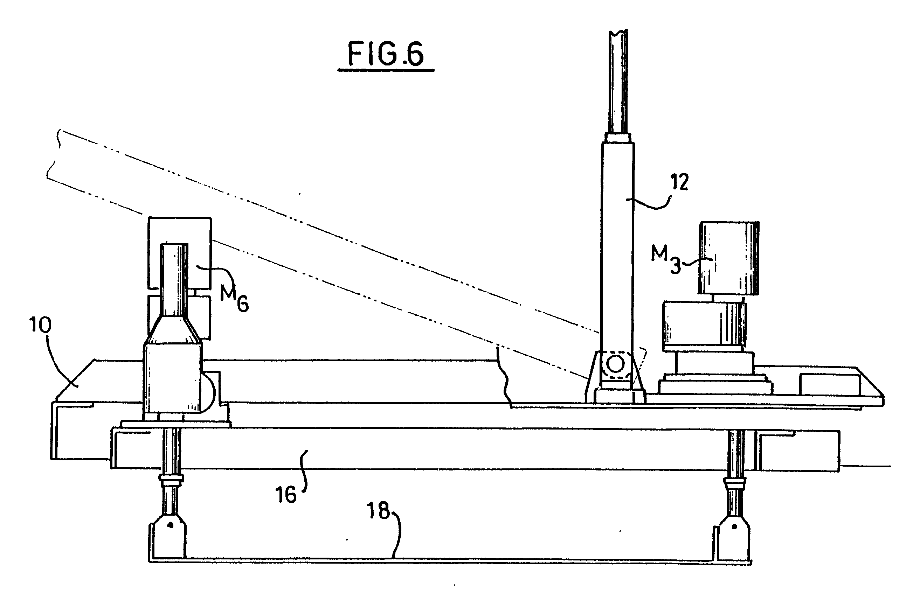

La tête de correction représenté notamment aux figures 1, 2 et 6 comprend essentiellement trois châssis. Un châssis supérieur 10 prévu pour être relié à l'extrémité de l'outil de pose mobile 12 par des moyens de fixation 14. Un châssis intermédiaire 16 relié au châssis supérieur 10. Un châssis inférieur 18 relié au châssis intermédiaire 16 et sur lequel sont fixés les moyens de retenue de l'élément dont on désire réaliser la pose et qui sont représentés en silhouette à la figure 1 sous la forme de ventouses.

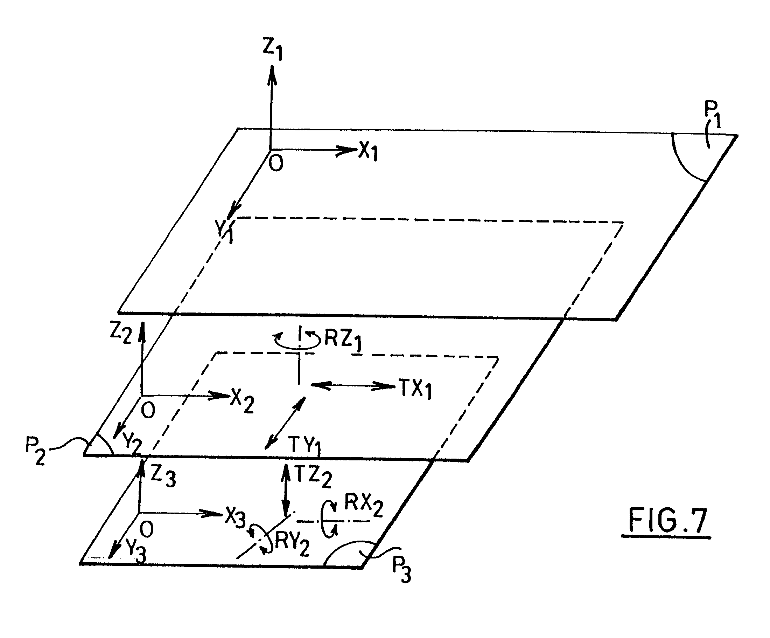

Chacun des trois châssis 10, 16 et 18 est constitué par un cadre métallique rectangulaire plan. On a représenté à la figure 7 schématiquement les plans géométriques $P_1$, $P_2$ et $P_3$ définis respectivement par le châssis supérieur 10, le châssis intermédiaire 16 et le châssis inférieur 18. Chacun des plans $P_1$ est muni d'un référentiel géométrique à trois axes orthogonaux $O_{X_i}$, $O_{Y_i}$ et $O_{Z_i}$, i variant de 1 à 3 selon le plan géométrique considéré.

Conformément à l'invention, la tête de correction de mouvements comporte des premiers moyens moteurs $M_1$, $M_2$ et $M_3$ qui permettent d'effectuer deux translations $T_{X_1}$ et $T_{Y_1}$ du plan $P_2$ parallèlement au plan $P_1$ selon les deux axes orthogonaux $O_{X_1}$ et $O_{Y_1}$ du plan $P_1$ et une rotation $R_{Z_1}$ du plan $P_2$ autour de l'axe orthogonal $O_{Z_1}$ du plan $P_1$. Ces trois mouvements de correction permettent donc d'effectuer un centrage plan sur plan du plan $P_2$ par rapport au plan $P_1$ durant lequel l'axe vertical $O_{Z_2}$ reste toujours parallèle à l'axe vertical $O_{Z_1}$.

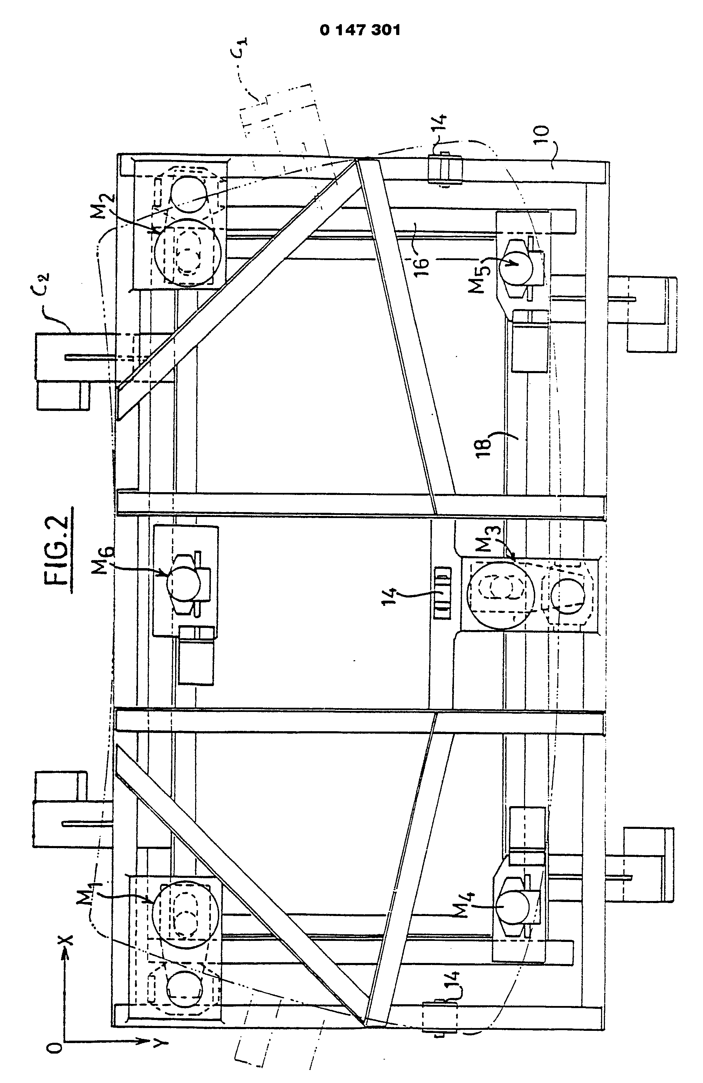

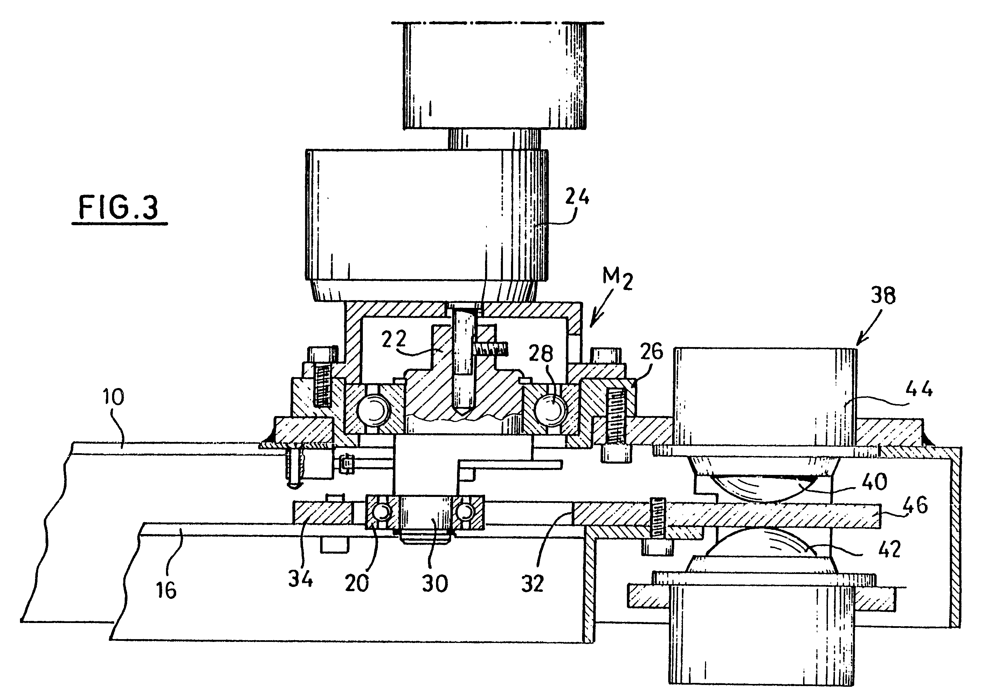

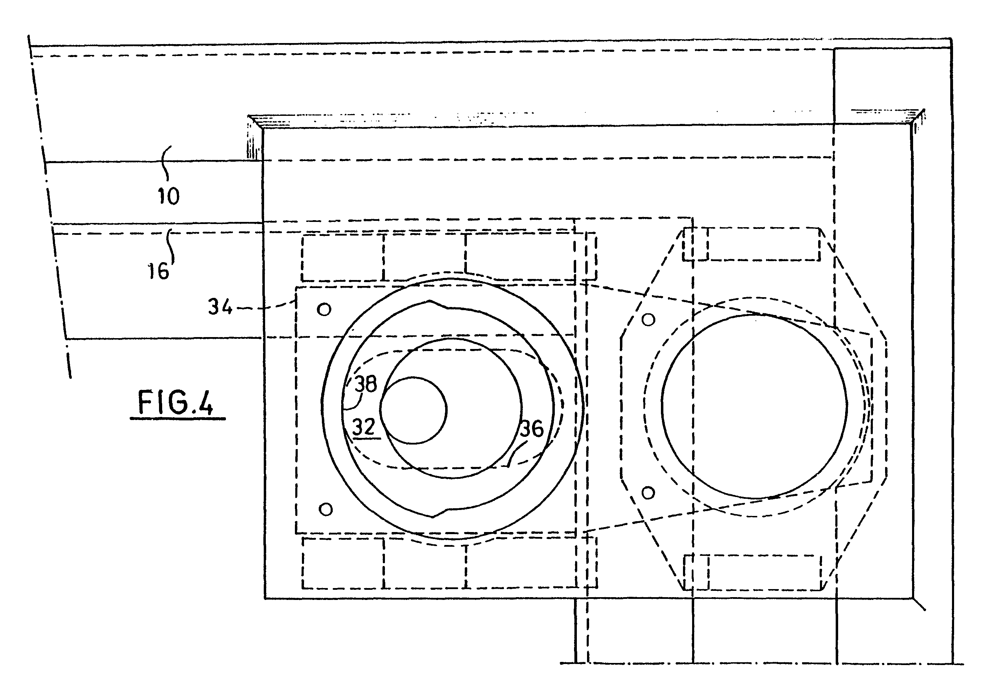

Les premiers moyens moteurs $M_1$, $M_2$ et $M_3$ sont constitués par trois mécanismes à excentrique identiques dont on décrira un exemplaire en se référant aux figures 3 et 4. Chaque moyen moteur M comporte un excentrique rond 20 entraîné en rotation par un axe moteur 22 décalé par rapport au centre de l'excentrique. L'axe moteur 22 est entraîné en rotation par un motoréducteur électrique 24 et est monté à rotation sur le châssis supérieur 10 par une bride 26 et un roulement 28. L'excentrique 20 proprement dit est constitué par un roulement monté à rotation sur l'extrémité inférieure décalée 30 de l'axe moteur 22 et est reçu dans une boutonnière 32 formée dans une plaque 34 rapportée sur le châssis intermédiaire 16. Chaque boutonnière 32 est délimitée par deux portions rectilignes parallèles 36 séparées d'une distance correspondant au diamètre de l'excentrique 20 et reliées par deux portions semi-circulaires 38. Comme on peut le constater à la figure 2, les trois axes géométriques des axes moteurs 22 de chacun des moyens moteurs $M_1$, $M_2$ et $M_3$ sont disposés aux sommets d'un triangle. Les deux boutonnières 32 des moteurs $M_1$ et $M_2$ sont parallèles entre elles et, dans le mode de réalisation représenté, parfaitement alignées ; la boutonnière 32 du troisième moteur $M_3$ étant orientée orthogonalement à la direction commune des boutonnières 32 des moteurs $M_1$ et $M_2$. Une telle disposition en triangle et avec orientation des boutonnières permet, en actionnant uniquement le moteur $M_3$, de provoquer une translation $T_{X_1}$ du châssis intermédiaire 16 et donc du plan $P_2$ par rapport au plan $P_1$ parallèlement à l'axe $O_{X_1}$ de ce dernier ; une commande simultanée dans le même sens de rotation, c'est-à-dire par exemple tous les deux dans le sens horaire des moteurs $M_1$ et $M_2$, permet de réaliser une translation $T_{Y_1}$ du châssis intermédiaire par rapport au châssis supérieur et donc du plan $P_2$ par rapport au plan $P_1$ parallèlememt à l'axe orthogonal $O_{Y_1}$ de ce dernier. Dans ces deux mouvements de translation qui viennent d'être décrits, les boutonnières du ou des moteurs qui ne sont pas actionnés servent de guidage aux mouvements de translation obtenus. On comprend également qu'un actionnement simultané mais en sens opposé des deux moteurs $M_1$ et $M_2$ permet d'obtenir une rotation du châssis intermédiaire 16 par rapport au châssis supérieur 10 et donc du plan $P_2$ par rapport au plan $P_1$ autour de l'axe orthogonal vertical $O_{Z_1}$ de ce dernier, l'excentrique 20 du moteur $M_3$ constituant le point de rotation du châssis.

Dans les trois mouvements de correction qui viennent d'être décrits, le châssis intermédiaire 16 reste parallèle au châssis supérieur 10, le plan $P_2$ restant donc également parallèle au plan géométrique $P_1$. Ce parallélisme des deux plans $P_2$ et $P_1$ est obtenu grâce à des moyens de guidage et de liaison 38 du châssis intermédiaire par rapport au châssis supérieur. Ces moyens de guidage 38 sont constitués par trois paires identiques de billes porteuses 40 et 42, chacune étant disposée à proximité d'un des trois moyens moteurs $M_1$, $M_2$ et $M_3$. Comme on peut le constater à la figure 3, la paire de billes porteuses 40, 42 est montée sur le châssis supérieur 10 dans un alésage 44 de ce dernier. Une patte de guidage plane 46, ici constituée par le prolongement de la plaque 34 dans laquelle est formée la boutonnière 32, est reçue entre les deux billes 40 et 42.

On comprend ainsi aisément que grâce aux trois pattes 46 reçues en roulement entre les paires de billes porteuses 40, 42 que le châssis intermédiaire 16 peut se déplacer parallèlement au châssis supérieur 10 sans frottements parasites et ce en réponse à l'actionnement des moteurs $M_1$, $M_2$ et $M_3$.

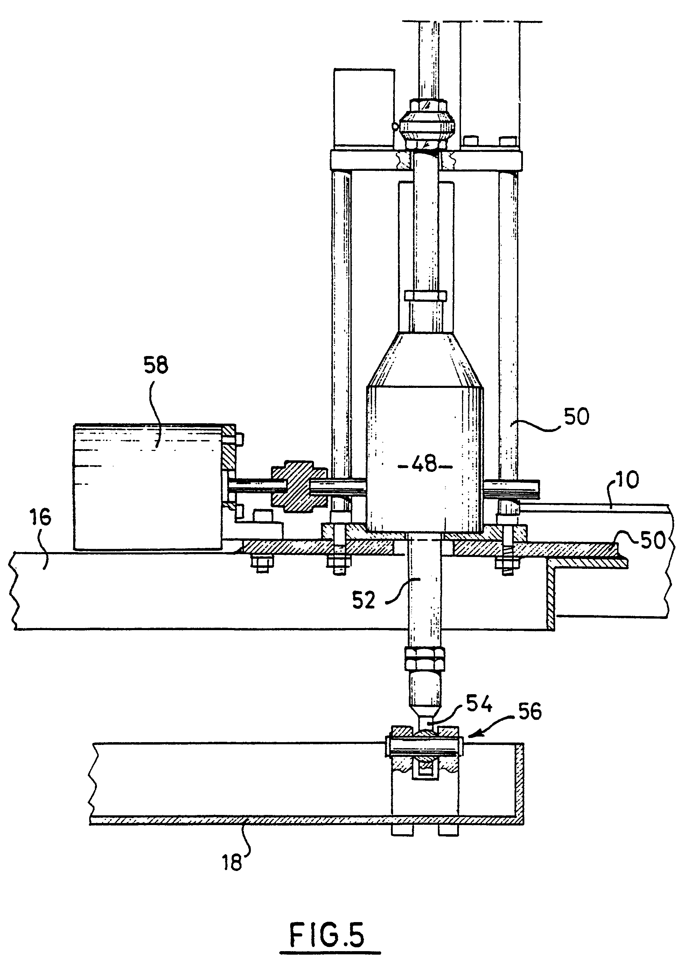

On décrira maintenant les seconds moyens moteurs de la tête de correction de mouvements en se référant à la figure 5. Les seconds moyens moteurs sont constitués par trois vérins à double action $M_4$, $M_5$, $M_6$ disposés en triangle sur le châssis intermédiaire 16. Chacun des trois vérins identiques $M_4$, $M_5$ et $M_6$ comporte un corps 48 fixé sur le châssis intermédiaire 16 par un dispositif de bridage et de fixation 50. Le vérin comporte également une tige de vérin 52 dont l'extrémité libre 54 est articulée sur le châssis inférieur 18 au moyen d'une articulation rotulée 56. Chacun des vérins $M_4$, $M_5$ et $M_6$ est un vérin à vis entraîné par un motoréducteur électrique 58 à renvoi d'angle.

Grâce à leur motoréducteur électrique 58, chacun des trois vérins $M_4$, $M_5$ et $M_6$ peut être commandé sélectivement en vue d'effectuer d'une part la translation verticale $T_{Z2}$ du châssis inférieur 18 par rapport au châssis intermédiaire 16 et donc du plan $P_3$ par rapport au plan $P_2$ et ce en actionnant simultanément les trois vérins $M_4$, $M_5$ et $M_6$ dans la même direction, et d'autre part les deux rotations $R_{X2}$ et $R_{Y2}$ du plan $P_3$ par rapport au plan $P_1$ autour de deux axes orthogonaux $O_{X2}$ et $O_{Y2}$ du plan $P_2$ défini par le châssis intermédiaire 16. La rotation $R_{Y2}$ peut par exemple être obtenue en actionnant dans des directions opposées les vérins $M_4$ et $M_5$ tandis que la rotation $R_{X2}$ peut être obtenue en actionnant simultanément dans le même sens les vérins $M_4$ et $M_5$ et dans le sens opposé le vérin $M_6$.

Grâce aux seconds moyens moteurs qui viennent d'être décrits, on peut réaliser la deuxième étape de correction de mouvements autour des trois axes restants durant laquelle le plan géométrique $P_3$ est déplacé dans l'espace par rapport au plan géométrique $P_2$ mais sans subir aucun mouvement transversal parallèlement à lui-même.

Selon une autre caractéristique de l'invention, les capteurs de proximité équipant l'outil de pose mobile sont fixés sur la tête de correction de mouvements et sont composés d'une première série de capteurs $C_1$ fixés sur le châssis intermédiaire 16 et d'une seconde série de capteurs $C_2$ fixés sur le châssis inférieur 18. Les capteurs de la première série $C_1$ sont des capteurs de proximité à grande portée (environ 40 mm) et les capteurs de la seconde série sont des capteurs de proximité de portée réduite (environ 10 mm).

La tête à six axes de correction de mouvements qui vient d'être décrite comporte également des moyens de traitement des signaux délivrés par les capteurs de proximité, qui n'ont pas été représentés, et qui calculent l'erreur de positionnement transversal de l'élément par rapport au support selon trois axes orthogonaux ainsi que l'erreur en rotation autour de ces trois axes et délivrent des signaux de commande en vue de la commande sélective des premier et second moyens moteurs. Pour des raisons de commodité et afin de limiter les câbles de transmission, les moyens de traitememt des signaux qui peuvent comprendre par exemple un automate programmable, des calculateurs analogiques ainsi que des relais ou des amplificateurs de puissance pour commander les motoréducteurs électriques, peuvent être regroupés en une unité qui est embarquée au-dessus de la tête de correction elle-même et qui se déplace avec l'outil mobile de pose.

Dans l'application qui vient d'être décrite de la tête à six axes de correction de mouvements pour un outil de pose automatique d'un élément de vitrage sur une caisse de véhicule automobile, l'étape de correction proprement dite effectuée au moyen de la tête est effectuée après qu'un premier positionnement relatif ait été obtenu par l'outil de pose automatique et ceci selon le procédé décrit dans la demande de brevet d'invention FR-A-2 510 933.

L'invention qui vient d'être décrite n'est pas limitée d'une part à son application au montage d'un élément de vitrage ou d'une garniture de pavillon sur une caisse de véhicule automobile et peut être adaptée à tout dispositif ou outil mobile grâce auquel on veut effectuer le montage adaptatif d'un élément sur un support ; d'autre part, la structure de la tête de correction qui vient d'être décrite peut présentée de nombreuses variantes : notamment les premiers moyens moteurs et les seconds moyens moteurs peuvent être inversés dans leur agencement, le réglage plan sur plan pouvant être effectué entre le châssis intermédiaire et le châssis inférieur tandis que le réglage en profondeur dans l'espace peut être disposé entre le châssis supérieur et le châssis intermédiaire. De même l'ensemble de la tête peut être « retourné » le châssis inférieur étant alors relié directement à l'extrémité de l'outil mobile de pose tandis que les moyens de préhension de l'élément que l'on désire monter sont fixés sur le châssis supérieur.

La tête à six axes de correction de mouvements qui vient d'être décrite peut également être utilisée en fabrication automatisée, application dans laquelle elle est disposée entre l'outil mobile (constitué par exemple par le bras d'un robot) et un moyen de fabrication tel qu'une pince de soudage, un outil d'usinage, un pistolet à peinture, etc.

## Revendications

1. Tête à six axes de correction de mouvements équipant un outil mobile (12) pour le montage adaptatif d'un élément sur un support muni d'une part de moyens de retenue de l'élément et d'autre part de capteurs ($C_1$, $C_2$) détectant la proximité du support et délivrant des signaux de commande aux moyens d'entraînement de l'outil mobile de montage pour le positionner correctement par rapport au support, caractérisée en ce qu'elle comporte un châssis supérieur (10) fixé à l'outil mobile de montage définissant un premier plan géométrique $P_1$, un châssis intermédiaire (16) définissant un second plan géométrique $P_2$ et relié au châssis supérieur (10) par des premiers moyens moteurs ($M_1$, $M_2$, $M_3$) permettant d'effectuer deux translations ($T_{X1}$, $T_{Y1}$) du plan $P_2$ parallèlement au plan $P_1$ selon deux axes orthogonaux ($O_{X1}$, $O_{Y1}$) du plan $P_1$ et une rotation ($R_{Z1}$) du plan $P_2$ autour d'un axe ($O_{Z1}$) orthogonal au plan $P_1$, un châssis inférieur (18) définissant un troisième plan géométrique $P_3$ et relié au châssis intermédiaire (16) par des seconds moyens moteurs ($M_4$, $M_5$, $M_6$) permettant d'effectuer une translation ($T_{Z2}$) du plan $P_3$ par rapport au plan $P_2$ selon un axe orthogonal ($O_{Z2}$) au plan $P_2$ et deux rotations ($R_{X2}$, $R_{Y2}$) du plan $P_3$ autour de deux axes orthogonaux ($O_{X2}$, $O_{Y2}$) du plan $P_2$, les moyens de retenue de l'élément étant fixés sur le châssis inférieur (18), lesdits signaux délivrés par les capteurs de proximité étant également délivrés aux moyens de commande des premiers et seconds moyens moteurs.

2. Tête à six axes de correction de mouvements selon la revendication 1, caractérisée en ce que les capteurs de proximité comportent une première série de capteurs ($C_1$) fixés sur le châssis intermédiaire (16) et une seconde série de capteurs ($C_2$) fixés sur le châssis inférieur (18).

3. Tête à six axes de correction de mouvements selon la revendication 2, caractérisée en ce que les capteurs ($C_1$) de ladite première série sont des capteurs de proximité à grande portée, les capteurs ($C_2$) de ladite seconde série étant des capteurs de proximité de portée réduite.

4. Tête à six axes de correction de mouvements selon l'une des revendications 1 à 3, caractérisée en ce que lesdits premiers moyens moteurs sont constitués par trois mécanismes comportamt chacun un excentrique rond (20) monté sur le châssis supérieur, entraîné en rotation par un axe moteur (22) orthogonal au plan $P_1$ décalé par rapport au centre de l'excentrique et reçu dans une boutonnière (32) formée dans le châssis intermédiaire et délimitée par deux portions rectilignes parallèles (36), les trois axes moteurs (22) étant disposés aux sommets d'un triangle, deux desdites boutonnières étant parallèles entre elles et la troisième boutonnière étant orthogonale à leur direction commune, la rotation de chacun des trois axes moteurs pouvant être commandée sélectivement en vue d'effectuer lesdites translations ($T_{X1}$, $T_{Y1}$) et ladite rotation ($R_{Z1}$) du plan $P_2$ par rapport au plan $P_1$.

5. Tête à six axes de correction de mouvements selon la revendication 4 caractérisée en ce qu'elle comporte des moyens de guidage et de liaison (38) du châssis intermédiaire par rapport au châssis supérieur assurant le parallélisme constant des plans $P_1$ et $P_2$.

6. Tête à six axes de correction de mouvements selon la revendication 5, caractérisée en ce que lesdits moyens de guidage et de liaison sont constitués par plusieurs paires de billes porteuses (40, 42) montées sur le châssis supérieur entre lesquelles sont reçues des pattes de guidage (46) planes fixées au châssis intermédiaire (16).

7. Tête à six axes de correction de mouvements selon l'une des revendications 1 à 3, caractérisée en ce que les seconds moyens moteurs sont constitués par trois vérins à double action ($M_4$, $M_5$, $M_6$) disposés en triangle dont chacun comporte un corps (48) fixé sur le châssis intermédiaire (16) et une tige (52) susceptible de se déplacer orthogonalement au plan $P_2$ et dont l'extrémité (54) est articulée sur le châssis inférieur (18), l'actionnement de chacun des trois vérins pouvant être commandé sélectivement en vue d'effectuer ladite translation ($T_{Z2}$) et lesdites rotations ($R_{X2}$, $R_{Y2}$) du plan $P_3$ par rapport au plan $P_1$.

8. Tête à six axes de correction de mouvements selon la revendication 1 ou 2, caractérisée en ce qu'elle comporte des moyens de traitement des signaux délivrés par les capteurs de proximité et qui calculent l'erreur de positionnement transversal de l'élément par rapport au support selon trois axes orthogonaux ainsi que l'erreur en rotation autour de ces trois axes et délivrant des signaux de commande en vue de la commande sélective des premiers et seconds moyens moteurs.

## Claims

1. A head having six axes for correction of movements, for use on a movable tool (12) for the adaptive mounting of an element on a support provided on the one hand with means for retaining the element and on the other hand with detectors ($C_1$, $C_2$) for detecting the proximity of the support and delivering control signals to the entrainment means of the movable mounting tool for correct positioning with respect to the support, characterised in that it comprises an upper frame (10) fixed to the movable mounting tool defining a first geometrical plane $P_1$, an intermediate frame (16) defining a second gecmetrical plane $P_2$ and connected to the upper frame (10) by first motor means ($M_1$, $M_2$, $M_3$) making it possible to carry out two translatory movements

$(T_{X1}, T_{Y1})$ of the plane $P_2$ parallel to the plane $P_1$ along two orthogonal axes $(O_{X1}, O_{Y1})$ of the plane $P_1$ and a rotary movement $(R_{Z1})$ of the plane $P_2$ about an axis $(O_{Z1})$ which is orthogonal to the plane $P_1$, a lower frame (18) defining a third geometrical plane $P_3$ and connected to the intermediate frame (16) by second motor means $(M_4, M_5, M_6)$ which make it possible to produce a translatory movement $(T_{Z2})$ of the plane $P_3$ with respect to the plane $P_2$ along an axis $(O_{Z2})$ orthogonal to the plane $P_2$ and two rotary movements $(R_{X2}, R_{Y2})$ of the plane $P_3$ about two orthogonal axes $(O_{X2}, O_{Y2})$ of the plane $P_2$, the means for retaining the element being fixed to the lower frame (18), said signals delivered by the proximity detectors also being delivered to the means for controlling the first and second motor means.

2. A head having six axes for correction of movements according to claim 1 characterised in that the proximity detectors comprise a first series of detectors $(C_1)$ which are fixed on the intermediate frame (16) and a second series of detectors $(C_2)$ which are fixed on the lower frame (18).

3. A head having six axes for correction of movements according to claim 2 characterised in that the detectors $(C_1)$ of said first series are long-range proximity detectors and the detectors $(C_2)$ of said second series are reduced-range proximity detectors.

4. A head having six axes for correction of movements according to one of claims 1 to 3 characterised in that said first motor means comprise three mechanisms each comprising a round eccentric (20) mounted on the upper frame and driven in rotation by a motor shaft (22) orthogonal with respect to the plane $P_1$ and offset with respect to the centre of the eccentric, and received in a slot (32) formed in the intermediate frame and delimited by two parallel rectilinear portions (36), the three motor shafts (22) being disposed at the apexes of a triangle, two of said slots being parallel to each other and the third being orthogonal to the common direction thereof, wherein the rotary movement of each of the three motor shafts can be controlled selectively in order to produce said translatory movements $(T_{X1}, T_{Y1})$ and said rotary movement $(R_{Z1})$ of the plane $P_2$ with respect to the plane $P_1$.

5. A head having six axes for correction of movements according to claim 4 characterised in that it comprises means (38) for guiding and connecting the intermediate frame with respect to the upper frame, ensuring constant parallelism of the planes $P_1$ and $P_2$.

6. A head having six axes for correction of movements according to claim 5 characterised in that said guiding and connecting means are formed by a plurality of pairs of carrier balls (40, 42) mounted on the upper frame, between which are received flat guide lugs (46) which are fixed to the intermediate frame (16).

7. A head having six axes for correction of movements according to one of claims 1 to 3 characterised in that the second motor means comprise three double-acting jacks $(M_4, M_5, M_6)$ disposed in a triangular configuration, each of which comprises a body (48) fixed to the intermediate frame (16) and a rod (52) which is capable of being displaced in orthogonal relationship to the plane $P_2$ and the end (54) of which is pivotally connected to the lower frame (18), wherein actuation of each of the three jacks can be controlled selectively in order to produce said translatory movement $(T_{Z2})$ and said rotary movements $(R_{X2}, R_{Y2})$ of the plane $P_3$ with respect to the plane $P_1$.

8. A head having six axes for correction of movements according to claim 1 or claim 2 characterised in that it comprises means for processing the signals delivered by the proximity detectors and which calculate the error in respect of transverse positioning of the element with respect to the support on three orthogonal axes and the error in respect of rotation about said three axes and delivering control signals for selective control of the first and second motor means.

**Patentansprüche**

1. Bewegungs-Korrekturkopf mit sechs Freiheitsgraden für ein bewegliches Werkzeug (12) zur angepaßten Montage eines Teils auf einer Halterung, mit einer Halteanordnung für das Teil einerseits und mit Fühlern (Cl, C2) andererseits zur Messung des Abstandes der Halterung, welche Steuersignale liefern an die Antriebsvorrichtung des beweglichen Montagewerkzeugs, um es korrekt bezüglich der Halterung auszurichten, dadurch gekennzeichnet, daß er ein oberes, am beweglichen Montagewerkzeug befestigtes Gestell (10) aufweist, das eine erste geometrische Ebene (P1) definiert, ein mittleres Gestell (16) aufweist, das eine zweite geometrische Ebene (P2) definiert und das mit dem oberen Gestell (10) durch eine erste Motoranordnung (M1, M2, M3) verbunden ist, die die Durchführung zweier Translationsbewegungen (Tx1, Ty1) der Ebene (P2) parallel zur Ebene (P1) ermöglicht, entlang zweier zur Ebene (P1) orthogonaler Achsen (Ox1, Oy1), sowie eine Rotationsbewegung (Rz1) der Ebene (P2) um eine zur Ebene (P1) orthogonale Achse (Oz1), und ein unteres Gestell (18) aufweist, das eine dritte geometrische Ebene (P3) definiert und mit dem mittleren Gestell (16) über eine zweite Motoranordnung (M4, M5, M6) verbunden ist, die die Durchführung einer Translationsbewegung (Tz2) der Ebene (P3) bezüglich der Ebene (P2) ermöglicht, entlang einer zur Ebene (P2) orthogonalen Achse (Oz2), sowie zweier Rotationsbewegungen (Rx2, Ry2) der Ebene (P3) um zwei zur Ebene (P2) orthogonale Achsen (Ox2, Oy2), wobei die Halteanordnung für das Teil am unteren Gestell (18) befestigt ist und die von dem Abstandsfühlern gelieferten Signale ebenfalls den Steueranordnungen der ersten und zweiten Motoranordnungen zugeführt werden.

2. Bewegungs-Korrekturkopf mit sechs Freiheitsgraden nach Anspruch 1, dadurch gekennzeichnet, daß die Abstandsfühler eine erste Reihe von Fühlern (C1) aufweisen, die am mittleren Gestell (16) befestigt sind und eine zweite Reihe von Fühlern (C2) aufweisen, die am unteren Gestell (18) befestigt sind.

3. Bewegungs-Korrekturkopf mit sechs Freiheitsgraden nach Anspruch 2, dadurch gekennzeichnet, daß die Fühler (C1) der ersten Reihe Abstandsfühler mit großer Reichweite sind und daß die Fühler (C2) der zweiten Reihe Abstandsfühler mit verringerter Reichweite sind.

4. Bewegungs-Korrekturkopf mit sechs Freiheitsgraden nach einem der Ansprüche 1 bis 3, dadurch gekennzeichnet, daß die erste Motoranordnung aus drei Mechanismen besteht, deren jede einen runden Exzenter (20) aufweist, der am oberen Gestell angeordnet ist und von einer Motorachse (22) in Drehungen versetzt wird, die orthogonal zur Ebene (P1) ist und bezüglich des Zentrums des Exzenters versetzt ist und die in ein Langloch (32) im mittleren Gestell eingreift, das durch zwei gerade parallele Abschnitte (36) begrenzt ist, wobei die drei Motorachsen (22) an der Spitze eines Dreiecks angeordnet sind und zwei Langlöcher parallel zueinander sind, während das dritte Langloch orthogonal zu ihrer gemeinsamen Richtung ist, wobei die Rotation einer jeden der drei Motorachsen wahlweise ansteuerbar ist im Hinblick auf die genannten Translationsbewegungen (Tx1, Ty1) sowie die genannte Rotationsbewegung (Rz1) der Ebene (P2) bezüglich der Ebene (P1).

5. Bewegungs-Korrekturkopf mit sechs Freiheitsgraden nach Anspruch 4, dadurch gekennzeichnet, daß er eine Führungs- und Verbindungsanordnung für das mittlere Gestellt aufweist bezüglich des oberen Gestells, die eine konstante Parallelität der Ebenen (P1) und (P2) gewährleistet.

6. Bewegungs-Korrekturkopf mit sechs Freiheitsgraden nach Anspruch 5, dadurch gekennzeichnet, daß die Führungsund Verbindungsanordnung aus mehreren Paaren von Lagerkugeln (40, 42) besteht, die am oberen Gestell angeordnet sind und zwischen denen ebene, am mittleren Gestell (16) befestigte Führungslaschen (46) angeordnet sind.

7. Bewegungs- Korrekturkopf mit sechs Freiheitsgraden nach einem der Ansprüche 1 bis 3, dadurch gekennzeichnet, daß die zweite Motoranordnung aus drei doppelt wirkenden Hebevorrichtungen (M4, M5, M6) besteht, die entlang eines Dreiecks angeordnet sind, wobei jede ein Gehäuse (48) aufweist, das am mittleren Gestell (16) befestigt ist und einen Stab (52), der orthogonal zur Ebene (P2) verschiebbar ist und dessen Ende (54) am unteren Gestell (18) angelenkt ist, wobei die Betätigung einer jeden der drei Hebevorrichtungen selektiv steuerbar ist, um die genannte Translationsbewegung (Tz2) und die genannten Rotationsbewegungen (Rx2, Ry2) der Ebene (P3) bezüglich der Ebene (P1) durchzuführen.

8. Bewegungs-Korrekturkopf mit sechs Freiheitsgraden nach Ansprüchen 1 oder 2, dadurch gekennzeichnet, daß er eine Verarbeitungsanordnung für die von den Abstandsfühlern stammenden Signale aufweist, welche den Positionierfehler in Querrichtung des Teils bezüglich der Halterung entlang dreier orthogonaler Achsen berechnet sowie den Rotationsfehler um diese drei Achsen, um Steuersignale für die selektive Steuerung der ersten und zweiten Motoranordnungen abzugeben.

FIG.1

FIG.2

FIG.3

FIG.4

FIG.5

# FIG.6

FIG.7